# EUROPEAN PATENT APPLICATION

(11) **EP 2 899 000 A1**
(43) Date of publication of application: **29.07.2015**
(21) Application number: 14152847.1
(22) Date of filing: 28.01.2014
(51) Int. Cl.: B26D 3/16, B26D 7/06, B26D 1/03, B26D 1/14, B26D 1/153, A23N 15/04, B65G 29/00, B65G 47/30

(54) **Cutting device for cutting vegetables, in particular cutting off ends of elongated vegetables**

(71) Applicant: Bastoon Beheer B.V., 7007 CA Doetinchem (NL)
(72) Inventor: van Felius, Jan, 4152 EM Rhenoy (NL)
(74) Representative: De Vries & Metman

(57) **Abstract**

The invention concerns a cutting device for cutting vegetables, comprising:
- first holding elements adapted to move and to hold one piece of vegetable in a first inclination against a first stopping member,
- a first cutting member proximate to said first stationary stopping member to cut off one end of the vegetable,
- second holding elements adapted to move and to hold the vegetable in a second inclination against a second stopping member,
- a second cutting member proximate to said second stationary stopping member to cut off the other end of the vegetable,
- a transfer station adapted to transfer the vegetable from a first holding element with the first inclination to a second holding element with the second inclination, and a drive means that moves the first and second holding elements synchronously.

## Description

The present invention relates to a cutting device for cutting vegetables, in particular cutting off ends of elongated vegetables.

Such a device is known from EP 2 500 154 A1. The known device comprises a table, a push bar for pushing carrots in a straight path in a transport direction over the table, a drive for moving the push bar in the transport direction, and a rotating knife with a first rotation axis perpendicular to the transport direction, wherein the push bar passes in a straight and/or uninterrupted path under the rotating knife and cams partly extending above the table together with supports on the push bar on both sides of the rotating knife push the carrots towards and/or against the rotating knife, wherein a first transport belt on the table in front of a first rotating knife moves the carrots perpendicular to the transport direction against a first rim at a side of the table, and wherein a second transport belt in front of a second rotating knife moves the carrots perpendicular to the transport direction against a second rim at a side of the table that is opposite the first rim.

A disadvantage of the known device is that the carrots might bounce due to moving the carrots against a rim at a side of the table by means of a transport belt or due to the cutting operation by one of the rotating knives. As a result the alignment of the carrots with respect to the cutting device changes leading to cutting of the carrots at undesired parts on the carrots or, even worse, to obstruction of the cutting device. Obstruction of the cutting device leads to standstill of the device being economically detrimental to a user of the cutting device.

The present invention has for its object to obviate or at least reduce such a drawback of the known art.

The invention provides for this purpose a cutting device for cutting vegetables, in particular cutting off ends of elongated vegetables, comprising:
- a plurality of first holding elements adapted to move along a first stationary stopping member and to hold at least one piece of vegetable in a first inclination against the first stopping member,
- a first cutting member positioned proximate to said first stationary stopping member, said first cutting member being adapted to cut off one end of the at least one piece of vegetable,
- a plurality of second holding elements adapted to move along a second stationary stopping member and to hold at least one piece of vegetable in a second inclination against the second stopping member,
- a second cutting member positioned proximate to said second stationary stopping member, said second cutting member being adapted to cut off the other end of the at least one piece of vegetable,
- a transfer station adapted to transfer the at least one piece of vegetable from a first holding element to a second holding element, and a drive means that moves the first and second holding elements synchronously,
- wherein the transfer station is adapted to change the first inclination of the piece of vegetable in the first holding element to the second inclination in the second holding element.

An advantage of the cutting device according to the invention is that, since the piece of vegetable, such as a carrot, slides against the first stationary stopping member and/or the second stationary stopping member inter alia under influence of the force of gravity, the carrot tranquilly moves towards the respective stationary stopping member. As a result, the carrot is always aligned as desired since the carrot shall not bounce during transport through the cutting device. Further, an undesired standstill of the cutting device is prevented, or at least the risk of a standstill is reduced since bouncing of the carrots during transport is prevented.

A further advantage of the cutting device according to the invention is that construction of the cutting device is relatively simple. Only one drive means is needed for driving the holding elements. In other words, the cutting device according to the invention provides savings due to that no additional drive means are needed.

The invention has various embodiments which will become apparent from the following description of several such embodiments. The advantageous inventive features of the invention in all its aspects, including the measures defined in de dependent claims, are by no means limited to the considerations stated above and/or below.

In an aspect the transfer station comprises transfer elements and wherein in a first location the transfer elements are located below the first holding elements and in a second location the transfer elements are located above the second holding elements and the transfer elements transfer the pieces of vegetable from the first location to the second location by sliding the piece of vegetable over a stationary plate of limited length or by transporting the piece of vegetable with a transport belt of limited length. The support surface or the transport belt supports the piece of vegetable during transport from the first location to the second location. In the second location of a transfer element, the piece of vegetable falls into a second holding element.

In a further embodiment of the cutting device the transfer station comprises vertical guide plates for guiding the piece of vegetable while it changes its inclination when it falls towards the second holding element. This ensures that a single vegetable from a first holding element transfers to a second holding element so that each holding element contains a single vegetable which improves cutting the ends of the vegetable.

In another aspect, the first stationary stopping member and/or the second stationary stopping member end(s) upstream with respect to the first cutting member and/or the second cutting member respectively. A purpose of the stationary stopping member is to stop the carrot in a holding element from moving down and at the same time aligning the carrot, such that the carrot is properly aligned with respect to the cutting member. After cutting off, e.g., a first end of a carrot, the carrot needs to be moved to the second holding elements in order to cut off the other end of the carrot. The carrots in the second holding elements are stopped by the second stationary stopping member in order to cut off the other end of the carrot. After both ends of the carrot are cut off, the carrots may leave the cutting device for further processing. By ending the stationary stopping elements, it is easily accomplished that the carrots moves further to the transfer or second holding elements or out of the cutting device.It is further advantageous that the carrot is given as much time as possible for moving from the first holding elements to the second holding elements via the transfer elements, such that the carrot may move calmly throughout the device. By calmly moving of the carrot throughout the device, it is prevented that the carrot bounces due to hitting a component of the device at a speed too high.

In yet a further aspect the first holding elements and the second holding elements are adapted to rotate around a rotation axis which might be vertical. The holding elements rotating around a rotation axis lead to a stable and strong construction that can rotate at high speed.

In another aspect, the first holding elements and the second holding elements are adapted to rotate around a common rotation axis. An advantage of this embodiment is that it is possible to make the cutting device as compact as possible, since the first holding elements and the second holding elements are adapted to be placed in proximity of each other. It is, therefore, advantageous that according to a further embodiment the first holding elements and the second holding elements are substantially located above each other and the transfer elements are between the levels of the first holding elements and the second holding elements. The space needed for the cutting device is determined by the size of one of the plurality of first and second holding elements and the plurality of transfer elements.

Furthermore, the carrots move throughout the device under influence of the force of gravity which is inter alia accomplished by placing the first holding elements above the second holding elements.

In another embodiment of the cutting device, the transfer station comprises transfer elements that are tiltable around a horizontal axis and can align with the first holding elements and the second holding elements. The transfer elements may be formed by a belt that moves over a cam surface so that the support surface of the transfer element can be brought in line with the holding elements whereby no additional moving parts are required.

In yet a further aspect, the transfer station comprises transfer elements with vertical guide plates between the transfer elements and the vertical guide plates are in the same plane as the side walls of the first and second holding elements. By guiding the vegetables between the vertical guide plates to the second holding element, the vegetables are guided continuously from a first holding element to a second holding element and cannot fall into an adjacent holding element.

In a further embodiment of the cutting device, the cutting device is connected or connectable to a feeding device for feeding pieces of vegetable to the first holding elements and wherein between adjacent first holding elements might be vertical first side walls and the feeding device feeds the pieces of vegetable between the first side walls. In this way immediately after being fed between the first side walls the vegetable is forced to remain above a first holding element and cannot move into another first holding element. Following vegetables will be fed between first side walls of the following first holding element so that each first holding element will contain only one vegetable.

In another embodiment of the cutting device, the first cutting member and/or the second cutting member comprise(s) a knife that might rotate. During movement of the vegetables along, for example, the first stationary stopping member, the vegetables move towards the cutting member. The holding elements push the vegetables against the cutting member, such that an end of the vegetables is cut off. In a further embodiment, the cutting operation is effectuated by means of adjacent knives so that more than one piece of vegetable is cut off.

It is, further, advantageous that the cutting device is connected or connectable to a transporting device for transporting vegetables away from the cutting device so that large quantities of vegetables can be handled with little effort.

In a further embodiment the holding elements are substantially V-shaped in cross-section. In this way the holding elements are easy to clean.

Following below is a description of several embodiments of the cutting device as shown in the accompanying drawings and provided only by way of example, and in which:
Fig. 1 is a perspective view of a first embodiment of a cutting device according to the invention;
Fig. 2 is a top view of the cutting device of Fig. 1;
Fig. 3 is an sectional view according to the line III-III in Fig. 2;
Fig. 4 is an enlarged sectional view according to lines IV in Fig. 3;
Fig. 5 is a top view of a second embodiment of a cutting device according to the invention; and
Fig. 6 is a top view of a third embodiment of a cutting device according to the invention.

In today's society, the demand for pre-cut or preprocessed pieces of vegetable is growing. In order to suffice to the growing demand, companies need to process more and more vegetables. In order to be able to process more pieces of vegetable, the companies may use a cutting device 1 according to the invention.

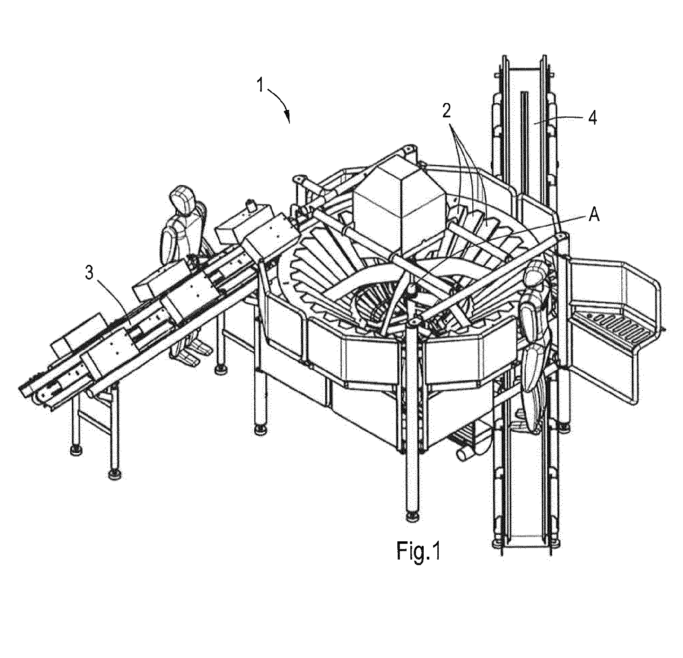

Fig. 1 - 4 show a first embodiment of a cutting device 1 according to the invention. The cutting device 1 is shown in Fig. 1, which cutting device 1 is connected to a feeding device 3 for feeding pieces of vegetables, in this embodiment for instance carrots but other vegetables are also possible, to the cutting device 1, and a transporting device 4 for transporting cut carrots away from the cutting device 1. In this embodiment the feeding device 3 is comprised of several sets of two transporting belts placed next to each other, such that a V-shape is formed by the two transporting belts. During transport of the carrots by means of the feeding device 3, the carrots are lying in the V-shape formed by two transporting belts.

Both ends of the carrots are cut off in the cutting device 1, as will be explained hereafter. After both ends of the carrots have been cut off, the carrots leave the cutting device 1 and are transported away by means of the transporting device 4. Transporting device 4 may be a flat transport belt, a transport belt provided with holding elements or any other suitable form of transporting device for transporting carrots. It is noticed, that is also possible to place one or more crates near the exit of the cutting device 1 in which the carrots fall after leaving the cutting device.

Regarding the feeding device 3 and the transporting device 4, the carrots move from the feeding device 3 to the cutting device 1, and from the cutting device 1 to the transporting device 4 at least partly under influence of gravity.

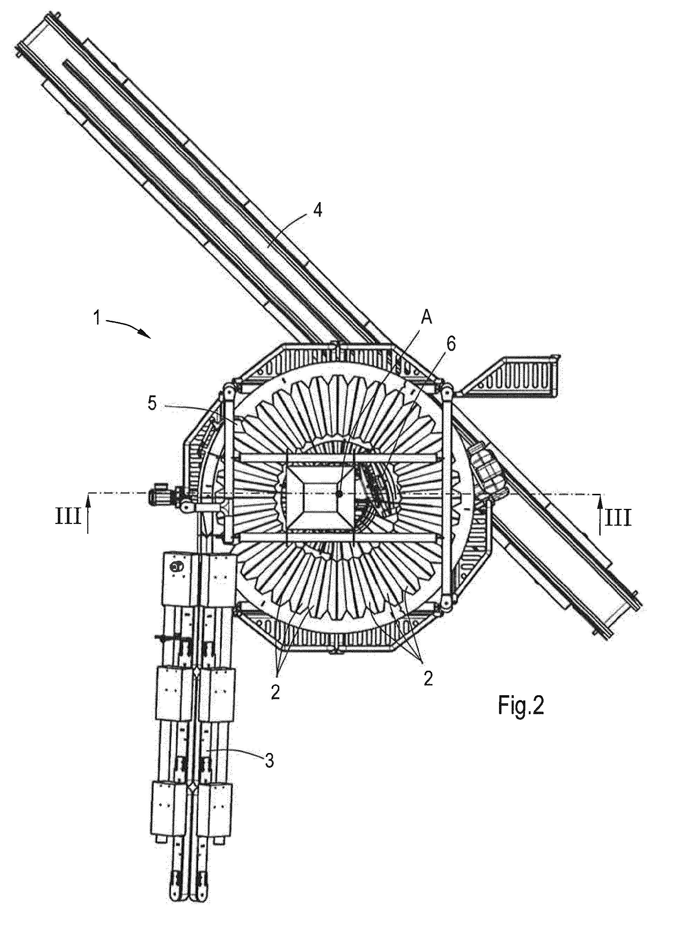

In Fig. 1 a plurality of first holding elements 2 is visible, which first holding elements 2 are mounted in a frame that rotates about a rotation axis A (see Fig. 2). The first holding elements 2 are inclined at an angle to the rotation axis A, which axis A is vertical, this angle is different from 90 degrees, such as in a range of 20 - 70 degrees or in a smaller range between 30 - 60 degrees. In the shown embodiment the first holding elements 2 are formed by two intersecting walls forming a V-shape, in other embodiments the holding element may be for example U-shaped.

Fig. 2 shows the feeding device 3 connected to the cutting device 1, and the transporting device 4 below the cutting device 1. It is visible that the first holding elements 2 are directed to the rotation axis A. A cutting member 6 is positioned at or proximate to an end of the lower part of the first holding elements 2. In practice, the cutting member 6 is positioned at or proximate to the end of the holding elements 2. More details of the cutting device 1 are clarified in relation to the following figures.

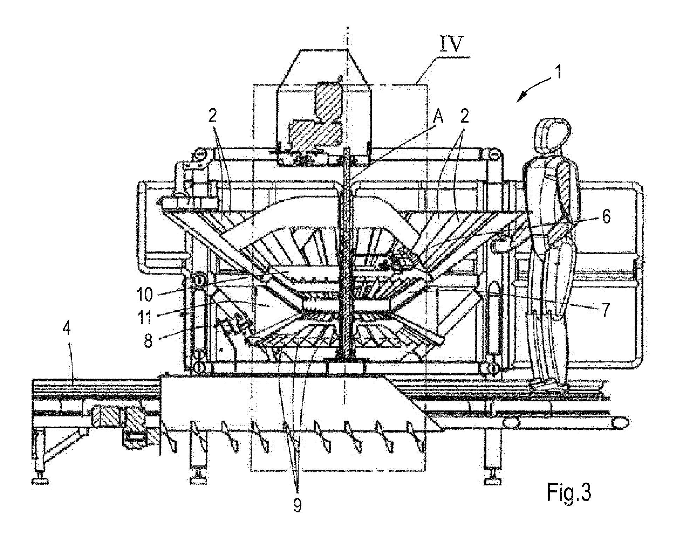

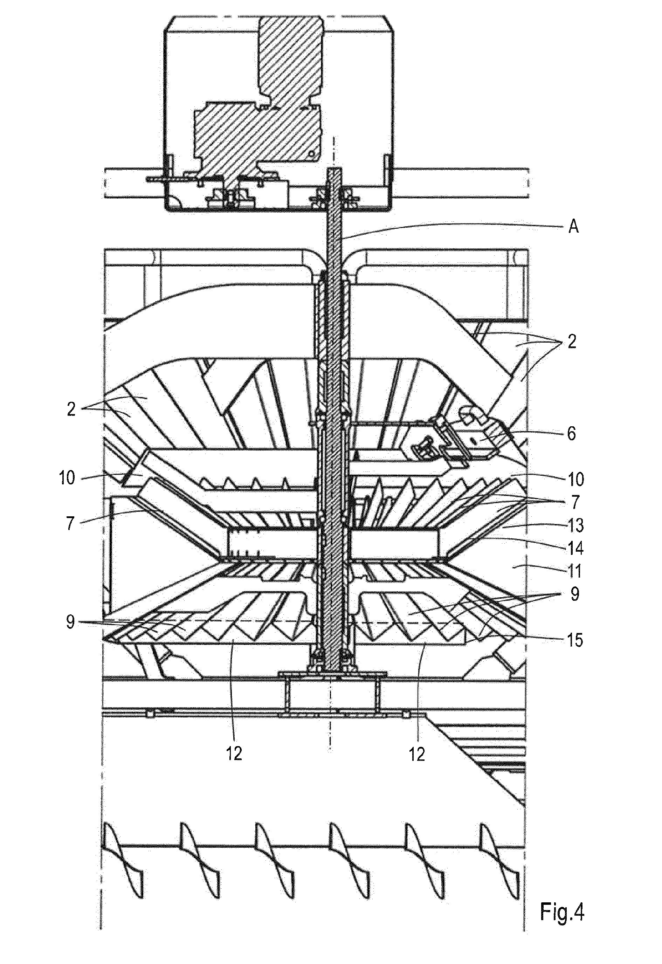

Figs. 3 and 4 show the cutting device 1 comprising a plurality of first holding elements 2, a plurality of second holding elements 9 and a plurality of transfer elements 7. It is noted that in Figs. 3 and 4, the insides of the first holding elements 2 and the transfer elements 7 are shown and the undersides of the second holding elements 9.

In order to give a better understanding of the working of the cutting device 1 according to the invention, the working of the cutting device is described stepwise. The carrots are fed at high speed into the cutting device 1 by the feeding device 3 and, subsequently, guided into the moving first holding elements 2. Since, as apparent from the figures, the holding elements 2 are inclined, the carrots move downwards within the holding elements 2 till the carrots abut the first stationary stopping member 10. The first holding elements 2 have side walls with upper rims between adjacent first holding elements and non-adjacent upper rims may have a ridge or pin at the same height for preventing the carrots from moving transversally over the first holding elements 2. It is intended that only one carrot is present in each holding element 2 and the rotation speed of the holding elements depends hereto of the feeding speed of the feeding device 3.

The carrots are moved by the first holding elements 2 along the first stationary stopping member 10 till the carrots encounter a first cutting member 6, which is placed proximate to the first stationary stopping member 10. The carrots are moved by means of the first holding elements 2 past the cutting member 6, such that the cutting member 6 cuts of a first end of the carrots.

After a first end is cut off, the carrots are moved further by means of the first holding elements 2 and concurrently the first stationary stopping member 10 ends. As a result, the carrots move further downwards to the transfer elements 7. It is also possible that the first stationary stopping member 10 ends before the first cutting member 6 and that the latter is provided with a separate stopping member (not shown) for stopping the carrots from moving further downwards. The separate stopping member may be adjustable to adjust the distance between the first cutting member 6 and the separate stopping member and thus the size of the cut off end of the carrot. The separate stopping member ends at or upstream with respect to the first cutting member 6.

The transfer elements 7 are formed by a stationary metal sheet that forms a support plate 13 and moving metal sheets that form side walls 14 substantially perpendicular to the support plate 13, which side walls 14 move over the support plate 13. The inclination of the transfer elements 7 is similar to the inclination of the first holding elements 2. The support plate 13 only extends over a part of the rotational movement, such that during a part of the rotational movement the side walls 14 move without being above the support plate 13, so that a carrot between the side walls 14 falls. The transfer elements 7 may be provided with a ledge (not shown) at the lowest side thereof in order to advance canting of the carrot when it falls.
The carrots in the transfer elements 7 are moved by the side walls 14 over the support plate 13 till the support plate 13 ends. At least at the position where the support plate 13 ends, a guiding element 11 is formed at least partly by the second holding elements 9, in particular a upwards extending side wall. The walls of the second holding elements 9 extend with a small gap to an underside of the support plate 13. The carrots are guided to the second holding elements 9 by the guiding element 11 under influence of gravity. As a result, the carrots fall off the support plate 13 between the walls of a second holding element 9 that guide the carrot to the bottom of the second holding element 9. Due to the walls of the second holding element 9 the carrot can only move towards the bottom of the holding element 9 that is immediately under the transfer element 7.

The second holding elements 9 are inclined in a direction opposite to the inclination direction of the first holding elements 2 and the transfer elements 7. As a result, the orientation of the carrots is changed, such that the not yet cut second end of the carrot points downwards and abuts against the second stationary stopping member 12 of which the position is indicated with lines 15. The secondary stationary stopping member 12 extends over a part of the rotational movement between the position where the support plate 13 ends and beyond a secondary stationary cutting member 8. The secondary cutting member 8 cuts of a second end of the carrots that slide over the stationary stopping member 12 and thereafter the secondary stationary stopping member 12 ends, such that the carrots move under the influence of gravity to the transporting device 4.

In the first embodiment, the holding elements of the first and/or second holding elements 2,9 are formed by V-shaped channels which might have at their lower end a stationary stopping member 10, 12. In the first embodiment the stationary stopping member only extends over a part of the rotation, such that the carrots are stopped by the stationary stopping during a part of the rotational movement and are allowed to move further under influence of gravity during another part of the rotational movement. The stopping member 10 may be formed by a metal sheet extending over a number of first holding elements 2. The part of the rotational movement in which the carrots are allowed to move out of the holding elements is chosen such that the carrots have the possibility to move calmly to the following plurality of holding elements or out of the cutting device. In practice, it may take up to between one or two seconds for a carrot to move from the first holding elements 2 to the second holding elements 9 via the transfer elements 7.

It is noted that the first holding elements 2, the second holding elements 9 and/or the transfer elements 7 move synchronously. The synchronous movement of the elements is accomplished on different ways. For example, the first embodiment of Fig. 1 comprises one axis A and the first, second and transfer elements are connected to the axis. A motor is provided for rotating the axis A and due to the movement of the axis A the first, second and transfer elements move synchronously.

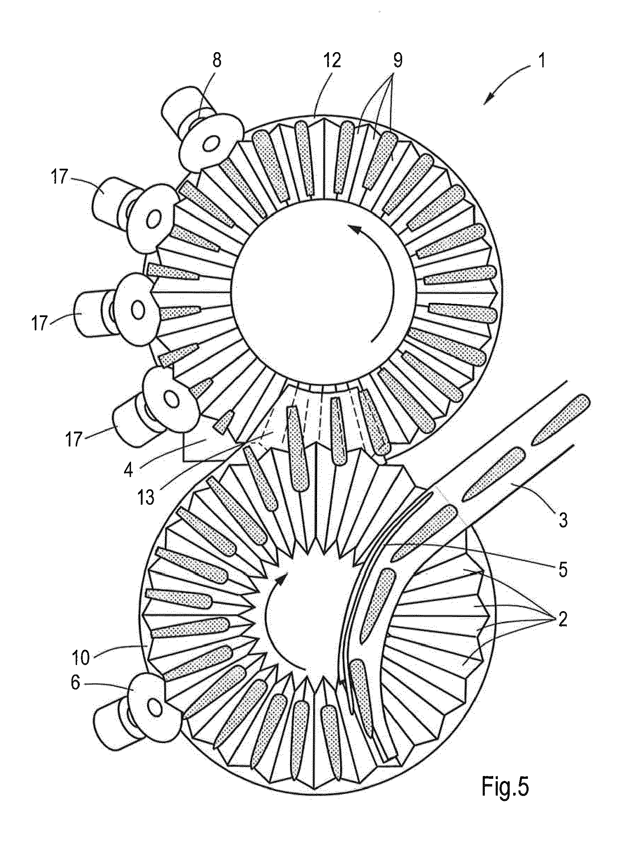

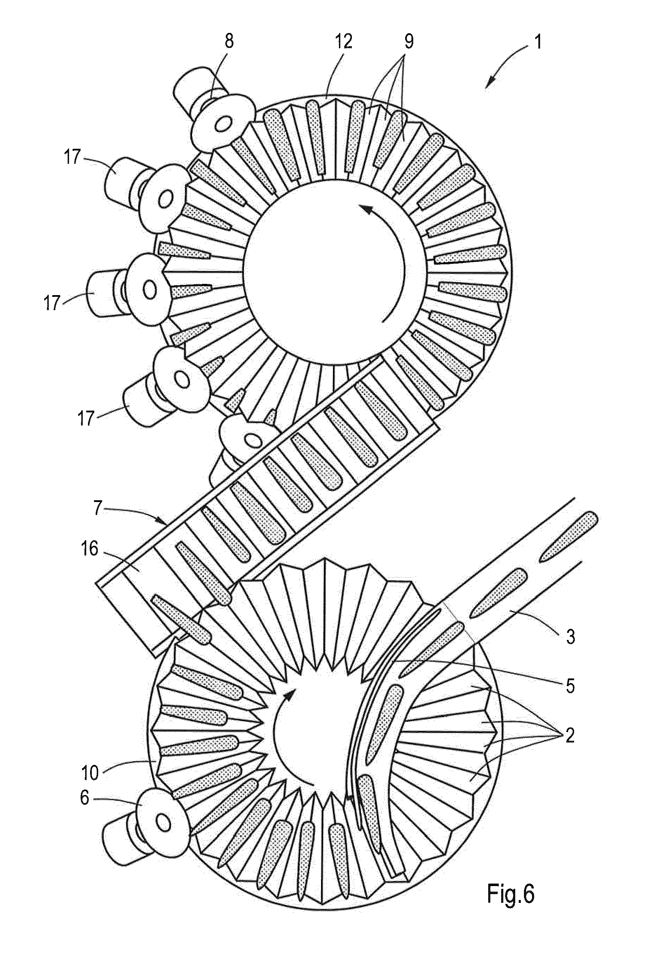

In the second and third embodiments of Fig. 5 and Fig. 6, the movements of the first holding elements 2, the second holding elements 9 and the transfer elements 7 are synchronized differently. The first holding elements 2 and the second holding elements 9 each rotate about a different rotation axis. A first way to synchronize the movement of the first and second holding elements 2,9 is providing a chain around both of the rotation axes, such that by driving one rotation axis the other rotation axis follows the movement due to the chain. The movement of the rotation axes is synchronized on this way. The movement of the transfer elements 7 is coupled to the rotation of the first holding elements 2 or the second holding elements 9. Other mechanical ways for coupling the movements of the holding elements 2,9 are possible. In another embodiment (not shown), each rotation axis has a separate motor for driving the rotation axis. In that situation the motors need to be synchronized, for example electronically.

It is remarked that a very large number of carrots may be cut by the cutting device 1 according to the invention. It is possible to cut between 5 and 10 carrots per second, preferably 8 carrots per second. It is possible to process such number of carrots per second, since the carrots move calmly throughout the device and therefore do not bounce out of the holding elements, or even worse out of the cutting device.

Fig. 5 shows a perspective view of the second embodiment of a cutting device 1 according to the invention. This embodiment of the cutting device 1 also comprises first holding elements 2, second holding elements 9 and transfer elements 7. This embodiment of the cutting device functions similar to the first embodiment of the cutting device 1. A difference between this embodiment and the first embodiment is that different frames hold the first and second holding elements 2, 9 and these frames are placed side by side. The second holding elements 9 are closer to an underground (lower) than the first holding elements 2. A further difference is that in this embodiment the first and second holding elements 2, 9 rotate in opposite direction so that, at the location where the first holding elements 2 and the second holding elements 9 are side by side near the transfer elements 7, they move in the same direction at the same rotation speed and the first holding elements 2 and the second holding elements 9 have an opposite inclination. (As mentioned earlier in the first embodiment the holding elements 2,9 have the same rotation direction and near the transfer elements 7 also an opposite inclination.) The transfer elements 7 in the second embodiment are formed substantially in a similar manner as the transfer elements 7 of the first embodiment and they are located immediately above the second holding elements 9 and rotate with these elements.

Fig. 6 shows a perspective view of the third embodiment of a cutting device 1 according to the invention. The working of this embodiment of the cutting device 1 is similar to the working of the first and second embodiment of the cutting device 1. Further, Fig. 6 shows how a feeding device 3 may be connected to the cutting device, and how the carrots might be transported to the first holding elements 2 by means of the guiding element 5.

A difference with previous embodiments is the way the transfer elements 7 are constructed. In the third embodiment, the transfer elements 7 are constructed by a transport belt 16 provided with trays for holding the carrots. During operation of the cutting device 1, a carrot falls or slides out of a first holding element 2 into one of the synchronously moving trays, which form the transfer elements 7, of the transport belt 16 and which are closed at the ends so that the carrot cannot slide out of the tray. The transport belt 16 moves and transports the carrots towards the end of the transport belt 16 above the second holding elements 9. At the end of the transport belt 16, the carrots fall of the transport belt 16 and out of the transfer elements 7 into second holding elements 9.

The second end of the carrots is cut off when the carrots are in the second holding elements 9. In this embodiments dividers 17 are placed downstream of the second cutting member 8 for dividing the carrots after both ends are cut off. The dividers 17 function in a more or less identical way as the first or second cutting member 7,8. In this manner, a user of the cutting device 1 may acquire pieces of carrots of predetermined length as a result of carrots moving throughout the cutting device 1.

In figure 6 the dividers 17 are indicated as rotating knives, but may also be formed by stationary knives. The dividers 17 may also be used in the first and second embodiments of Fig. 1-4 and Fig. 5. The dividers 17 are intended for cutting the carrots into pieces with a fixed length. With the first divider 17, an additional stopping member is provided after the second cutting member 8 for stopping the carrots for moving further downwards. A additional stationary stopping member is provided for each divider 17, which additional stationary stopping member is provided upstream with respect to the following divider 17.

After examination of the foregoing many alternative and additional embodiments will occur to the skilled person, all lying within the scope of the present invention as defined in the appended claims. It is, for example, possible to cut the ends of other vegetables, such as zucchinis and cucumbers, with the cutting device according to the invention.

It is also noticed that in further embodiments (not shown) the first, second and/or transfer elements may be formed by conveyor belts provided with holding elements, whereby the conveyor belts holding the first holding elements 2 and the second holding elements 9 are inclined in opposite directions; the inclination of a conveyor belt containing the transfer elements 7 might be similar to the first holding elements 2, to the second holding elements 9 or this belt might have a changing inclination which is at a first location in line with the first holding elements 2 and in a second location with the second holding elements 9. In a further embodiment (not shown), with the first holding elements 2 and the second holding elements 9 on opposite inclined conveyer belts, there is a transfer station between the inclined conveyer belts. In the transfer station the vegetable (such as a carrot) falls of the first holding element 2 on the first conveyor belt in the second holding element 9 on the second conveyor belt without there being a specific position that can be called a transfer element. When the vegetable falls from the first conveyor belt to the second conveyor belt there might be guide plates in the transfer station that guide vegetable in a controlled way during falling and its change of inclination. Further, it is noted that the holding and/or transfer elements in the first, second or third embodiments may have a V-shape, a U-shape or any shape suitable for transporting pieces of vegetable throughout a cutting device. The first, second and/or transfer element may have an at least partly open bottom, such that the cutting device can be easily cleaned due to that cleaning water can flow out of the element through the at least partly open bottom. Further, it is noticed that a feeding device is not essential and that pieces of vegetable may be fed to the cutting device manually.

## Claims

1. Cutting device for cutting vegetables, in particular cutting off ends of elongated vegetables, comprising:
- a plurality of first holding elements adapted to move along a first stationary stopping member and to hold at least one piece of vegetable in a first inclination against the first stopping member,
- a first cutting member positioned proximate to said first stationary stopping member, said first cutting member being adapted to cut off one end of the at least one piece of vegetable,
- a plurality of second holding elements adapted to move along a second stationary stopping member and to hold at least one piece of vegetable in a second inclination against the second stopping member,
- a second cutting member positioned proximate to said second stationary stopping member, said second stationary cutting member being adapted to cut off the other end of the at least one piece of vegetable,
- a transfer station adapted to transfer the at least one piece of vegetable from a first holding element to a second holding element, and a drive means that moves the first and second holding elements synchronously,
- wherein the transfer station is adapted to change the first inclination of the piece of vegetable in the first holding element to the second inclination in the second holding element.

2. Cutting device according to claim 1, the transfer station comprises transfer elements and wherein in a first location the transfer elements are located below the first holding elements and in a second location the transfer elements are located above the second holding elements and the transfer elements transfer the pieces of vegetable from the first location to the second location by sliding the piece of vegetable over a stationary plate of limited length or by transporting the piece of vegetable with a transport belt of limited length.

3. Cutting device according to claim 1 or 2, wherein the transfer station comprises vertical guide plates for guiding the piece of vegetable while it changes its inclination when it falls towards the second holding element.

4. Cutting device according to claim 1, 2 or 3, wherein the first stationary stopping member and/or the second stationary stopping member end(s) upstream with respect to the first cutting member and/or the second cutting member respectively.

5. Cutting device according to any one of the preceding claims, wherein the first holding elements and the second holding elements are adapted to rotate around a rotation axis, which might be vertical.

6. Cutting device according to claim 5, wherein the first holding elements and the second holding elements are adapted to rotate around a common rotation axis.

7. Cutting device according to any one of the preceding claims, wherein the first holding elements and the second holding elements are substantially located above each other and the transfer elements are between the levels of the first holding elements and the second holding elements.

8. Cutting device according to one of the preceding claims, wherein the transfer station comprises transfer elements that are tiltable around a horizontal axis and can align with the first holding elements and the second holding elements.

9. Cutting device according to any one of the preceding claims, wherein the transfer station comprises transfer elements with vertical guide plates between the transfer elements and the vertical guide plates are in the same plane as the side walls of the first and second holding elements.

10. Cutting device according to any one of the preceding claims, wherein said cutting device is connected or connectable to a feeding device for feeding pieces of vegetable to the first holding elements and wherein between adjacent first holding elements might be vertical first side walls and the feeding device feeds the pieces of vegetable between the first side walls.

11. Cutting device according to any one of the preceding claims, wherein the first cutting member and/or the second cutting member comprise(s) a knife that might rotate.

12. Cutting device according to any one of the preceding claims, wherein the first cutting member and/or the second cutting member comprise(s) more than one knife that might rotate.

13. Cutting device according to any one of the preceding claims, wherein the cutting device is connected or connectable to a transporting device for transporting the at least one piece of vegetable away from the cutting device.

14. Cutting device according to one of the preceding claims, wherein the holding elements are substantially V-shaped in cross-section.
